# EUROPÄISCHE PATENTANMELDUNG

(11) **EP 0 901 874 A2**
(43) Veröffentlichungstag der Anmeldung: **17.03.1999**
(21) Anmeldenummer: 98116446.0
(22) Anmeldetag: 31.08.1998
(51) Int. Cl.: B23K 26/08

(54) **Vorrichtung zum Bearbeiten rohrförmiger Körper mittels eines Laserstrahles**

(30) Priorität: 02.09.1997 IT MI971995
(71) Anmelder: Adige Sala S.p.A., 38056 Levico Terme (TN) (IT)
(72) Erfinder: Capra, Giancarlo, 38056 Levico Terme (TN) (IT); Niato, Carlo, 38056 Levico Terme (TN) (IT)
(74) Vertreter: Mayer, Hans Benno, Dipl.-Ing.

(57) **Zusammenfassung**

Vorrichtung zum Bearbeiten rohrförmiger Körper mittels eines Lasertrahles, bestehend aus einer Laserschneideinrichtung, die gesteuert in Längrichtung, in Querrichtung sowie in der Höhe gegenüber dem zu bearbeitenden rohrförmigen Werkstück antreibbar ist und an einem Ende des Maschinengestelles ein Spannfutter zur Aufnahme sowie zur gesteuerten Drehbewegung des Werkstückes angeordnet ist und im Anschluss an das drehbare Spannfutter ein gesteuert verfahrbarer Wagen vorgesehen ist, der zum Zuführen und zum Entladen der rohrförmigen Werkstücke dient, und am Ende des Maschinengestelles eine Vorrichtung zum Entladen sehr kurzer Werkstücke angeordnet ist.

## Beschreibung

Die vorstehende Erfindung betrifft eine Vorrichtung zum Bearbeiten rohrförmiger Werkstücke mittels eines Laserstrahles.

Es sind bereits Einrichtungen zum Bearbeiten rohrförmiger Werkstücke mittels eines Lasertrahles, bekannt geworden.

Diese Einrichtungen weisen einen verhältnismässig komplizierten Aufbau auf, und in den meisten Fällen ist es nicht möglich, den Beladevorgang bzw. den Entladevorgang der rohrförmigen Werkstücke zu automatisieren.

Die bekannten Einrichtungen erfordern häufig die Durchführung von Montage- bzw. Demontagearbeiten, die recht aufwendig sind, z.B. für das Anbringen der Vorrichtung für die Drehung des rohrförmigen Werkstückes. Ferner versperren die bekannten Dreheinrichtungen dieser Art meistens den freien Zugang zur Maschine.

Aufgabe der vorstehenden Erfindung ist es, eine Maschine vorzuschlagen, mit der die Nachteile des Standes der Technik vermieden werden können und eine Einrichtung zu schaffen, die ein rationales Bearbeiten rohrförmiger Werkstücke, unter Zuhilfenahme eines Laserstrahles, ermöglicht.

Diese Aufgabe wird mit einer Maschine erzielt, die eine Laserschneideinrichtung aufweist, die gesteuert in Längsrichtung, in Querrichtung sowie in der Höhe gegenüber dem zu bearbeitenen rohrförmigen Werkstück verschiebbar ist, wobei an einem Ende des Maschinengestelles ein Spannfutter zum Spannen und zum gesteuerten Drehen des rohrförmigen Werkstückes vorgesehen ist und im Anschluss an das drehbare Futter ein gesteuerter, verfahrbarer Wagen zum Zuführen sowie zum Entladen der rohrförmigen Werkstücke vorgesehen ist, und am Maschinenende eine Vorrichtung zum Entladen von kurzen Werkstücken angeordnet ist.

Mit einer Einrichtung dieser Art ist es möglich, von einer Beladeebene, die vor der Maschine angeordnet ist, ein rohrförmiges Werkstück in das Spannfutter einzuführen und dazu einen Wagen einzusetzen, der gesteuert antreibbar ist.

Am Wagen sind Greifer vorgesehen, die das vordere Ende des rohrförmigen Werkstückes, das durch den Laserstrahl zu bearbeiten ist, ergreifen, wobei aus dem Spannfutter die gewünschte Rohrlänge herausgezogen wird.

Anschliessend erfolgt eine gesteuerte Drehbewegung des Rohres und durch die Schneideeinrichtung, die in Längrichtung, in Querrichtung und in der Höhe gegenüber dem rohrförmigen Werkstück bewegbar ist, werden die gewünschten Schneidvorgänge durchgeführt.

Am Ende der Schneidvorgänge wird erneut der mit Greifern ausgerüstete Wagen betätigt, um das fertig bearbeitete Werkstück zu ergreifen und zu entlanden, bzw. die Entladevorrichtung, die am Ende der Maschine auf der gegenüberliegenden Seite des Spannfutters vorgesehen ist, zu beschicken.

Die erfindungsgemässe Aufgabe wird nun anhand eines Ausführungsbeispieles genauer beschrieben und in den beigefügten Zeichnungen dargestellt.

Es zeigen:
Figur 1 die Maschine in einer Seitenansicht;
Figur 2 die Maschine in einer Vorderansicht;
Figur 3 das Spannfutter zum Drehen des Werkstückes im Schnitt;
Figur 3a das Futter teilweise im Schnitt und teilweise in Vorderansicht;
Figur 4 den mit Greifern bestückten Wagen in einer Ansicht von oben;
Figur 5 den mit Greifern bestückten Wagen in einer Seitenansicht;
Figur 5a den mit Greifern bestückten Wagen in einer Vorderansicht; und
Figur 6 die Werkstückentladeeinrichtung in einer Vorderansicht.

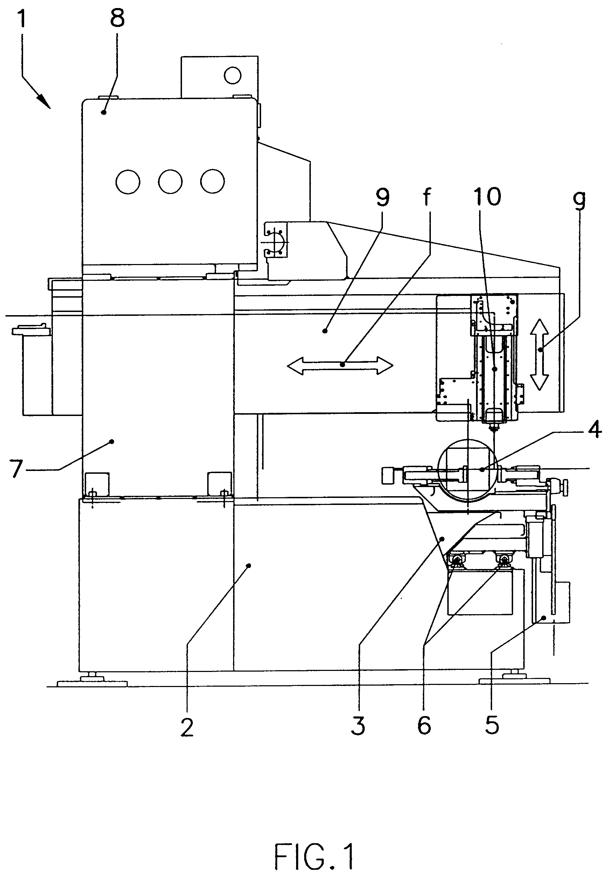

Wie der Figur 1 zu entnehmen ist, weist die Maschine 1 im wesentlichen L-förmige Gestalt auf.

Der waagerecht angordnete Arm 2 des L-förmigen Maschinengestelles legt eine Arbeitsebene fest, die an der Vorderseite eine Ausnehmung 3 aufweist, die sich über die gesamte Länge des Maschinengestelles erstreckt.

Die Ausnehmung 3 nimmt ein Spannfutter 4 für die Drehung der Werkstücke sowie einen mit Greifern bestückten Wagen 5, der entlang paralleler Führungen 6 bewegbar ist, auf. Die parallelen Führungen 6 erstrecken sich über die gesamte Länge des Maschinengestelles.

Der senkrecht angeordnet Arm 7 des L-förmigen Maschinengestelles nimmt ein oberes Joch 8 auf, das in Längsrichtung der Maschine 1 verschiebbar einen abkragenden Auslegerarm 9 (Cantilever) aufnimmt.

Der Auslegerarm 9 trägt eine Einrichtung 10 zur Erzeugung eines Lasertrahles.

Auch die Laserschneideinrichtung 10 ist gesteuert in Richtung des Pfeiles (f), sowie in Richtung des Pfeiles (g) bewegbar.

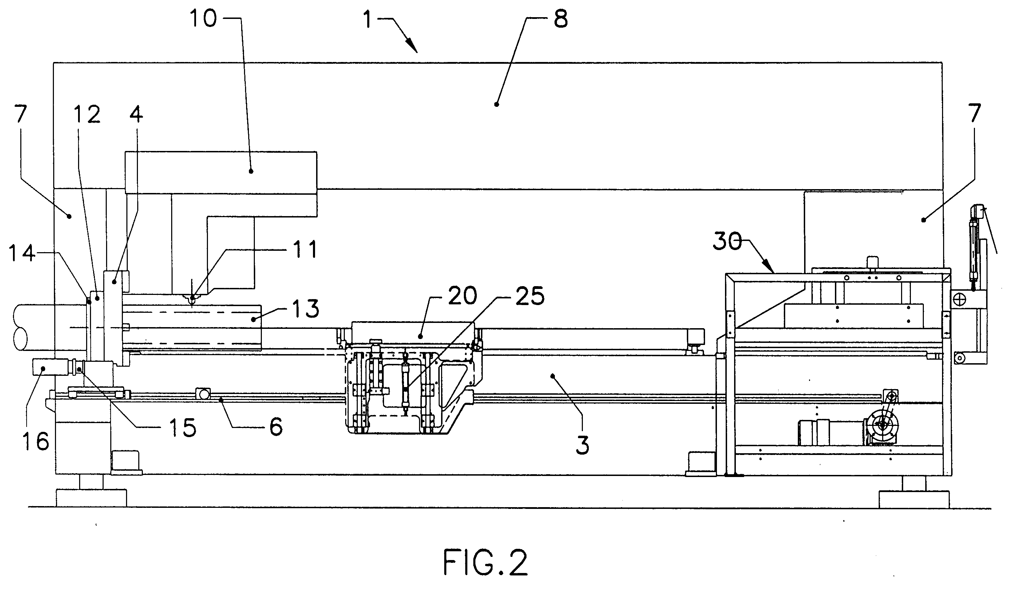

In Figur 2 ist die Maschine 1 in Vorderansicht dargestellt.

Es können die Säulen 7 entnommen werden, die an ihrer Oberseite über das Joch 8 verbunden sind. Das Joch nimmt verfahrbar die Einrichtung 10 zur Erzeugung des Laserstrahles auf, der über eine Düse 11 austritt.

Über die gesamte Länge des Maschinengestelles 1 ist an der Vorderseite eine Ausnehmung 3 vorgesehen. Die Ausnehmung 3 nimmt Führungen 6 auf, die am Boden der Ausnehmung befestigt sind. Die Führungen nehmen in unmittelbarer Nähe der linken Säule 7 ein drehbares Spannfutter 4 auf, das als selbstzentrierendes Spannfutter ausgebildet ist, welches ein rohrförmiges Werkstück 13, das durch die Einrichtung 10, 11 zu bearbeiten ist, aufnimmt.

Das Futter 4, das von dem zu bearbeitenden rohrförmigen Werkstück 13 durchdrungen wird, ist mit einem Zahnrad 14 verbunden, mit dem ein Antriebsritzel 15 kämmt, das von der Welle eines steuerbaren Motors 16 aufgenommen wird.

Durch den steuerbaren Motor 16 kann dem Werkstück 13 eine gesteuerte Drehbewegung übertragen werden.

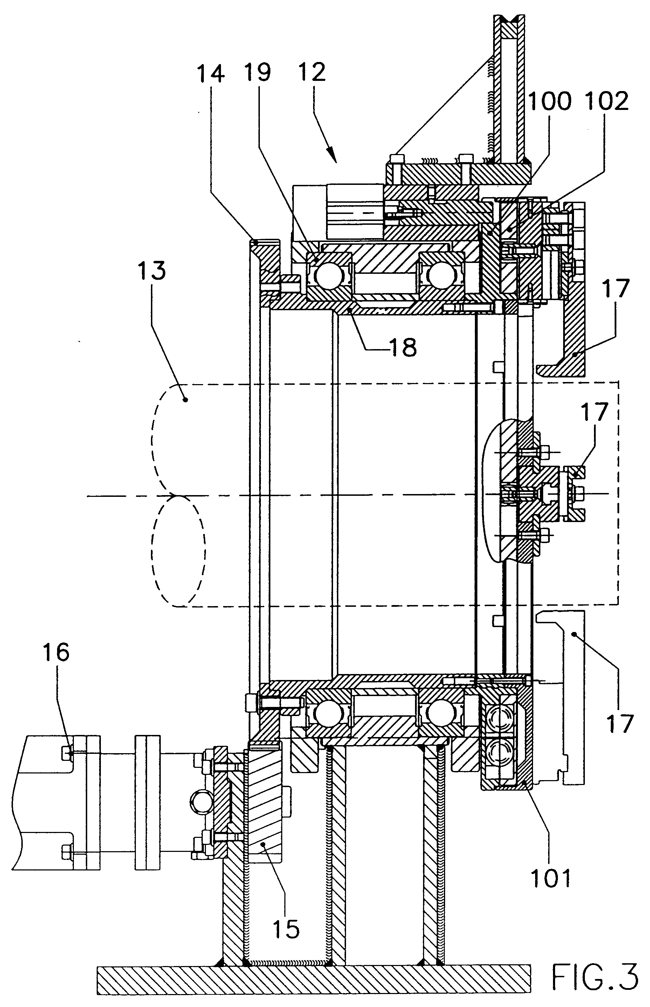

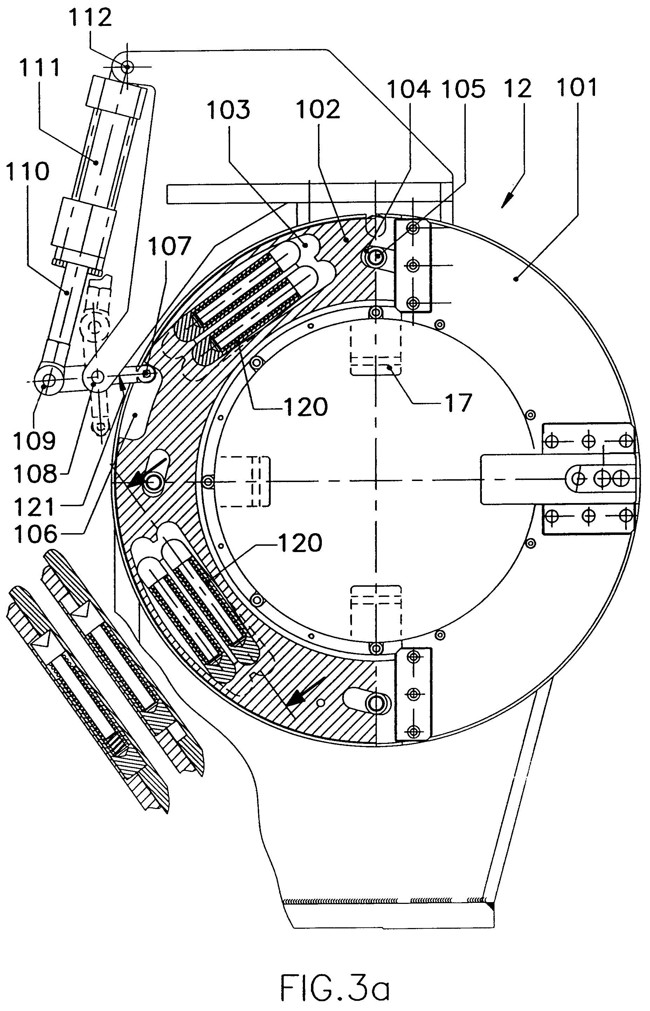

In Figur 3 ist das Spannfutter 4 im Schnitt dargestellt.

Das Futter 4 weist verschiebbare Backen 17 auf, die über steuerbare, mechanische, pneumatische oder hydraulische Hilfseinrichtungen verschiebbar sind.

Die Spannbacken 17 sind derartig ausgebildet, dass sie nach Durchführung einer Voreinstellung, einen kurzen Hub durchführen können, um mit Sicherheit das rohrförmige Bauteil 13, das mit Strichpunktlinien dargestellt ist, spannen zu können.

Der zentrale Körper 18 des Spannfutters 4 ist als rohrförmiger Körper ausgebildet und drehbar über Kugellager 19 von einer fest angeordneten Halterung aufgenommen.

Dieser rohrförmige Körper 18 des Futters 4 ist mit einem Zahnkranz 14 verbunden, der mit dem Ritzel 15 des steuerbaren Antriebsmotors 16 in Wirkverbindung steht. Der steuerbare Motor kann z.B. als steuerbarer Gleichstrommotor oder als Brushless-Motor ausgebildet sein und kann eine genau gesteuerte Drehbewegung durchführen.

Mit dem rohrförmigen Körper des Futters 4, wie aus Figur 3-3a ersichtlich ist, ist ein innenliegender Flansch 100 sowie ein aussenliegender Flansch 101 fest verbunden.

Zwischen dem Flansch 100 und dem Flansch 101 ist drehbar ein Ring 102 gelagert, der eine beschränkte, gesteuerte Drehbewegung durchfuehren kann.

Um diese Drehbewegung mit geringem Hub einleiten zu können, sind im Inneren des Flansches 100 sowie im Inneren der bewegbaren Scheibe 102 Oeffnungen oder tangentiale Ausnehmungen 103 angeordnet, welche Federmittel 120 aufnehmen, die sowohl vom Körper des fest angeordneten Flansches 100 als auch am drehbar angeordneten Ring 102 anliegen und die Tendenz haben, dem Ring 102 eine Drehbewegung in entgegengesetzter Richtung zu verleihen.

In den Ring 102 sind Betätigungsöffnungen 104 eingearbeitet, die mit dem Ende eines Hebels 105 in Wirkverbindung stehen.

Der Hebel 105 ist zum Betätigen der Spannbacken 17 vorgesehen.

Um die in den Ausnehmungen 103 vorgesehenen Federn 120 in gespannter Lage zu halten, weist der Ring 102 in Umfangsrichtung eine Steueröffnung 106 auf.

Mit dieser Steueröffnung 106 tritt das Ende 107 eines Steuerhebels 121 in Wirkverbindung.

Der Hebel 121 ist im Punkt 108 der fest angeordneten Lagerung des Futters 4 angebracht.

Das zweite Ende 109 des Hebels 121 ist mit einer Stange 110 einer Kolben-Zylindereinheit 111 verbunden und die Kolben-Zylindereinheit ist im Punkt 112 an der fest angeordneten Halterung des Futters 4 angeordnet.

Somit, bei einer mit durchgehenden Linien dargestellten Lage des Steuerhebels 107, 108, 109, sind die Federn 120 vorgespannt und die Spannbacken 17 befinden sich in geöffneter Lage.

Bei einem Verschwenken, z.B. des Hebels 107 in die mit gestrichelten Linien dargestellte Stellung, wird die Scheibe 102 freigegeben und somit kann diese eine Bewegung in entgegengesetztem Uhrzeigersinn durch das Einwirken der Federn 120, die sich ausdehnen, durchführen, um dadurch ein Schliessen der Spannbacken zu erzielen.

Der Figur 2 kann auch die Anordnung der Führungen 6 am Grund der Ausnehmung 3 zur Aufnahme des gesamthaft mit 20 gekennzeichneten Wagens erfolgen.

Der Wagen 20 kann mit gesteuerter Bewegung, z.B. unter Einsatz von Ketten oder einer Kugelumlaufspindel längs der Führungen 6 verfahren werden.

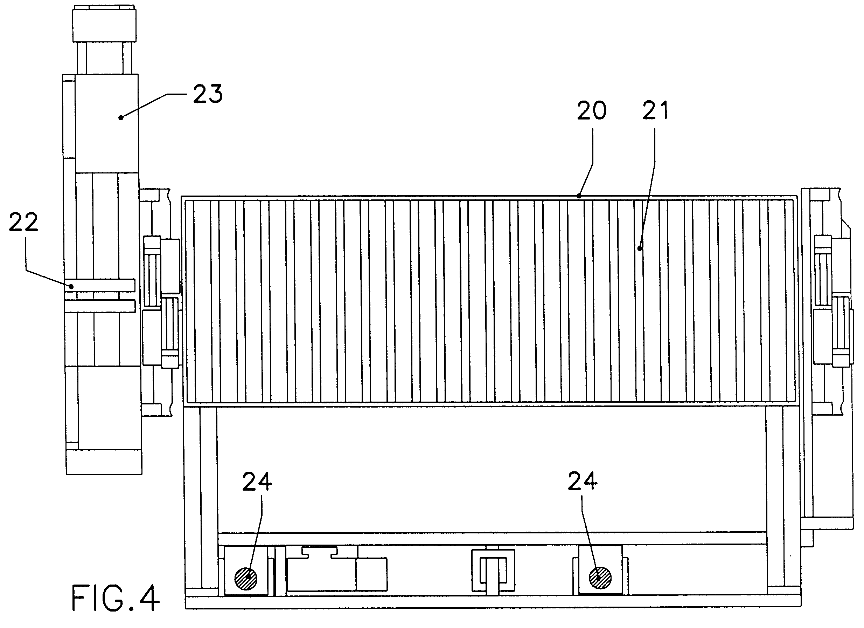

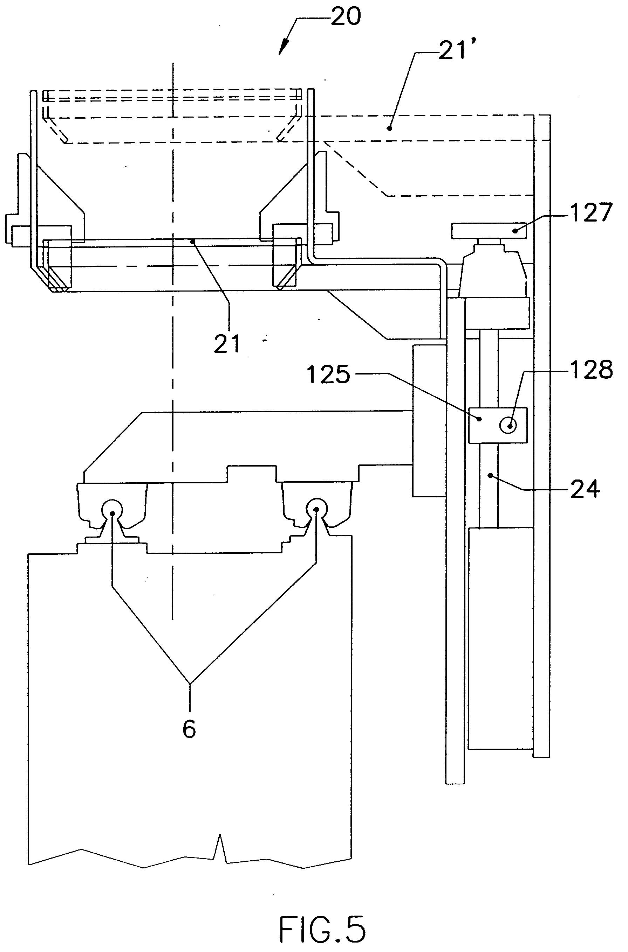

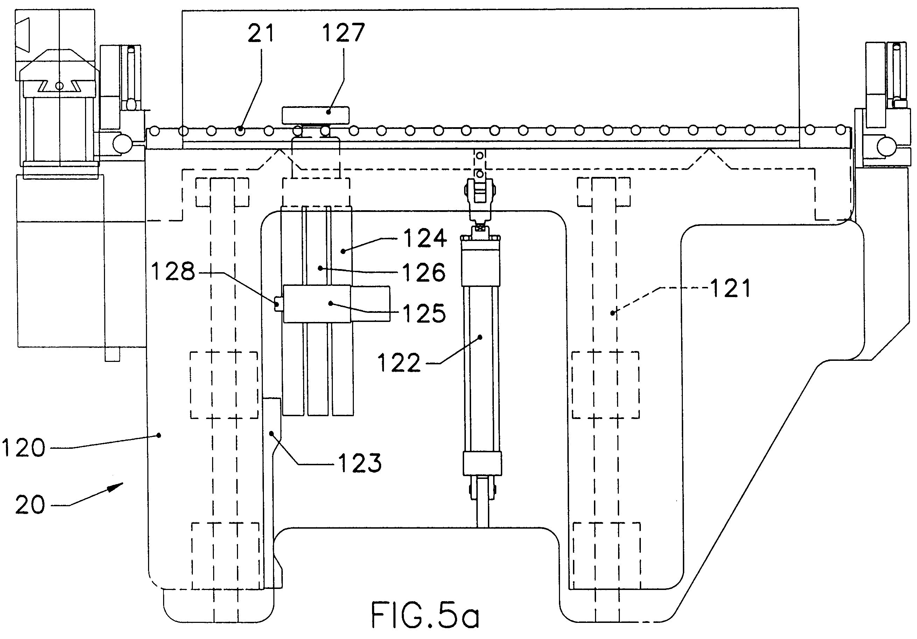

Der Wagen 20 wird genauer unter Zuhilfenahme der Figuren 4 und 5 beschrieben.

Figur 4 zeigt den Wagen 20 in einer Draufsicht. Im wesentlichen besteht der Wagen 20 aus einem Rollengang 21, der an seiner Vorderseite mit Greifern 22 ausgerüstet ist, die unter Zuhilfenahme einer Kolben-Zylindereinheit 23 geöffnet, bzw. geschossen werden können.

Mit den steuerbaren Greifern 22 kann das Rohrstück 13 erfasst werden und bei geöffneten Spannbacken 17 des Spannfutters, unter Durchführung einer gesteuerten Verschiebebewegung des Wagens 20, positioniert werden.

Der Wagen 20, wie in Figur 5 dargestellt, ist längs der parallelen Führungen 6, die in der Ausnehmung 34 des Grundgestelles der Maschine angeordnet sind, verfahrbar.

In vorteilhafter Weise kann der Rollengang 21 aus einer Ruhelage, die in Figur 5 mit vollen Linien dargestellt ist, mit gesteuerter Bewegung in eine Entladeposition 21', die mit gestrichelten Linien dargestellt ist, verfahren werden.

Um ein genaues Verschieben des Wagens 20 in einer senkrechten Ebene zu ermöglichen, ist der verfahrbare Teil des Wagens 20 über Säulen 24 geführt und ein gesteuertes Verschieben des Rollenganges 21 erfolgt in vorteilhafter Weise, unter Zuhilfenahme einer Kolben-Zylindereinheit 25, wie in Figur 2 dargestellt, oder unter Zuhilfenahme eines steuerbaren Elektromotors.

Der Figur 5a kann der Wagen 20 in einer Vorderansicht entnommen werden.

Die Einrichtung 121, die unter Zuhilfenahme einer Kolben-Zylindereinheit 122 längs paralleler Führungen 121 verfahrbar ist, weist ein Haltemittel in Form eines Anschlages 123 auf, das nach oben oder nach unten bewegbar ist, wenn der Rollengang über die Kolben-Zylindereinheit 122 angetrieben wird.

Die fest angeordnete Einrichtung des Wagens 20 nimmt verfahrbar entlang paralleler Führungen 124 eine Kolben-Zylindereinheit 125 auf, die unter Zuhilfenahme einer Gewindespindel 126, die z.B. über ein Handrad 126 betätigbar ist, in eine gewünschte Stellung verfahren werden kann.

Will man den Rollengang 21 mit höchster Genauigkeit in einer bestimmten Arbeitslage anordnen, so genügt es, die vorher in ihrer Lage eingestellte Kolben-Zylindereinheit 125 zu betätigen und durch Ausfahren der entsprechenden Kolbenstange 128 einen Anschlag für einen Vorsprung 123, der mit dem verfahrenen Wagen fest verbunden ist, zu schaffen.

Unter Zuhilfenahme der Vorrichtung 125 wird es ermöglicht, den Rollengang 21 mit höchster Genauigkeit an den Durchmesser des zu bearbeitenden Rohres anzupassen.

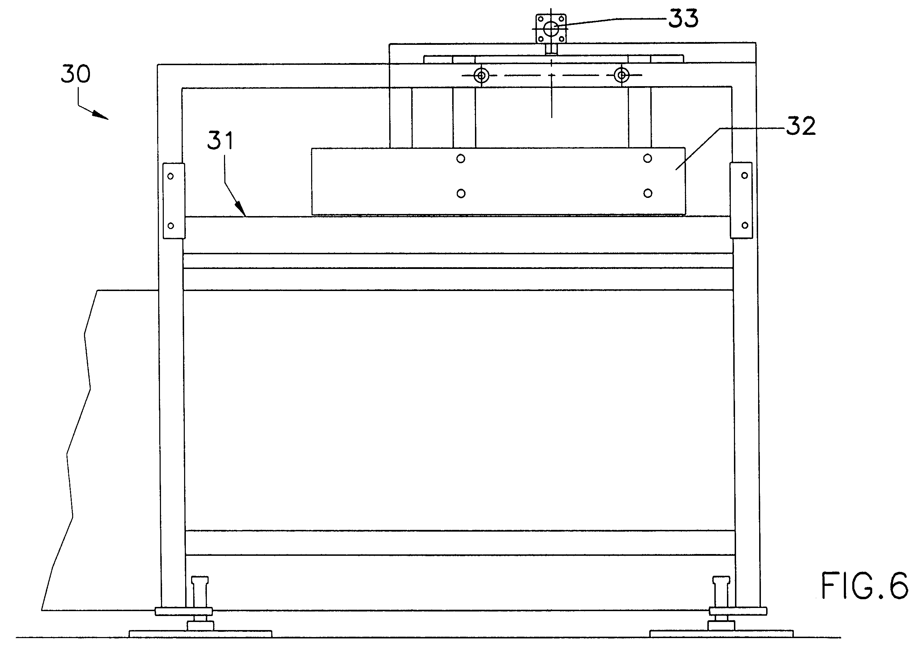

Um die bearbeiteten Rohrstücke entladen zu können, ist in der Nähe der rechten Säule 7 der Maschine 1 (Figur 2) eine Entladevorrichtung 30 vorgesehen, die genauer in Figur 6 dargestellt ist.

Die Entladevorrichtung 30 weist eine Auflageebene 31 zur Aufnahme der Rohrstücke auf, die z.B. unter Zuhilfenahme des Wagens 20 angefördert werden.

Über eine verfahrbare Platte 32, die in einer horizontalen Ebene angeordnet ist, wird z.B. unter Einsatz einer Kolben-Zylindereinheit 33 ermöglicht, die Platte zu verschieben, um den Entladevorgang des fertig bearbeiteten Werkstückes mit Vorsicht durchführen zu können.

## Patentansprüche

1. Einrichtung zum Bearbeiten von rohrförmigen Körpern, unter Verwendung eines Laserstrahles, mittels einer Laserschneideinrichtung, die in gesteuerter Weise in Längsrichtung, in Querrichtung, sowie in der Höhe gegenüber dem zu bearbeitenden rohrförmigen Werkstück bewegbar ist, **dadurch gekennzeichnet**, dass an einem Ende (7) eines Maschinengestelles (1) ein Spannfutter (4) zum Spannen sowie zum gesteuerten Drehen eines rohrförmigen Werkstückes (13) vorgesehen ist und im Anschluss an das drehbare Futter (4) ein Wagen (20) zum Zuführen und Entladen der rohrförmigen Werstücke (13) angeordnet ist und am anderen Ende des Maschinengestelles (1) eine Vorrichtung (30) zum Entladen kurzer Werkstücke (13) vorgesehen ist.

2. Einrichtung, nach Patentanspruch 1, **dadurch gekennzeichnet**, dass das Spannfutter (4) zum Spannen und Drehen des rohrförmigen Werkstückes (13) von dem zu bearbeitenden rohrförmigen Werkstück (13) durchdrungen wird und das Futter (4) steuerbare Spannbacken (17) aufweist und mit einem Zahnkranz (14) verbunden ist, mit dem das Antriebsritzel (14) eines steuerbaren Motors (16) kämmt.

3. Einrichtung, nach Patentanspruch 1, **dadurch gekennzeichnet**, dass der Wagen (20) zum Beladen der rohrförmigen Werkstücke (13) gesteuert antreibbare Greifer (22) aufweist, die mit einer Rollenbahn (21) zusammenarbeiten und diese Rollenbahn gesteuert in einer vertikalen Ebene bewegbar ist.

4. Einrichtung, nach Patentanspruch 1, **dadurch gekennzeichnet**, dass entlang der Vorderseite des Maschinengestelles (1) eine Ausnehmung (3) vorgesehen ist, die am Boden parallele Führungen (6) aufnimmt und diese Führungen (6) das Spannfutter (4) für das Werkstück (13), den Wagen (20) zur Lageanordnung, sowie zum Entladen des Werkstückes (13) und die Vorrichtung zum Entladen (30) kurzer Werkstücke (13) aufnehmen.

5. Einrichtung, nach Patentanspruch 1, **dadurch gekennzeichnet**, dass zwischen dem Flansch (100) und dem Flansch (101) des Futters (4) drehbar eine Ringscheibe (102) angeordnet ist, dass im Inneren des Flansches (100) sowie im Inneren der Ringscheibe (102) tangential angeordnete Öffnungen (103) vorgesehen sind, die Federmittel (120) aufnehmen, die die Tendenz haben, dem Ring (102) eine Drehbewegung in Schliessrichtung der Spannbacken (17) zu übertragen.

6. Einrichtung, nach Patentanspruch 5, **dadurch gekennzeichnet**, dass der Ring (102) in Umfangsrichtung eine Steueröffnung (106) aufweist, mit der das Ende (107) eines Steuerhebels (121) in Wirkverbindung steht und der Steuerhebel mit der Kolbenstange (110) einer Kolben-Zylindereinheit (111) in Wirkverbindung steht.

7. Einrichtung, nach Patentanspruch 1, **dadurch gekennzeichnet**, dass der Aufbau (120) des Wagens (20), der längs der Führungen (121) unter Verwendung eines Betätigungsmittels (122) bewegbar ist, einen Vorsprung aufweist, der einen Anschlag (123) bildet, und das Gestell des Wagens (20) eine Kolben-Zylindereinheit (125) aufnimmt, die verschiebbar an Führungen (124) angeordnet ist, und unter Zuhilfenahme einer Gewindespindel (126) in ihrer Lage einstellbar ist und die aus der Kolben-Zylindereinheit (125) ausgefahrene Kolbenstange (128) am Anschlag (123) zur Anlage gelangt.
